(19) **Europäisches Patentamt**
**European Patent Office**
**Office européen des brevets**

(11) **EP 3 072 572 A1**

(12) **EUROPÄISCHE PATENTANMELDUNG**

(43) Veröffentlichungstag:
**28.09.2016 Patentblatt 2016/39**

(21) Anmeldenummer: **15160998.9**

(22) Anmeldetag: **26.03.2015**

(51) Int Cl.:
***B01D 47/10*** *(2006.01)* ***B01D 47/12*** *(2006.01)*

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA**

(71) Anmelder: **Bayer Technology Services GmbH 51368 Leverkusen (DE)**

(72) Erfinder:
• **Esser, Ralf**
  **41352 Korschenbroich (DE)**
• **Reither, Karl**
  **53842 Troisdorf (DE)**

(74) Vertreter: **BIP Patents**
**c/o Bayer Intellectual Property GmbH**
**Alfred-Nobel-Straße 10**
**40789 Monheim am Rhein (DE)**

(54) **Vorrichtung und Verfahren zur Abscheidung von Staub**

(57) Die vorliegende Erfindung betrifft eine Vorrichtung und ein kontinuierliches Verfahren zur Abscheidung von Staub. Insbesondere betrifft die Erfindung eine Vorrichtung und ein kontinuierliches Verfahren zur energieoptimierten Abscheidung von Staub, wobei ein Differenzdruckwäscher mit einstellbaren Venturikehlen einem Differenzdruckwäscher umfassend ein oder mehrere Venturikehlen und eine oder mehrere Hybriddüsen vorgeschaltet ist.

EP 3 072 572 A1

**Beschreibung**

Die vorliegende Erfindung betrifft eine Vorrichtung und kontinuierliches Verfahren zur Abscheidung von Staub. Insbesondere betrifft die Erfindung eine Vorrichtung und ein kontinuierliches Verfahren zur energieoptimierten Abscheidung von Staub, wobei ein Differenzdruckwäscher mit einstellbaren Venturikehlen einem Differenzdruckwäscher umfassend ein oder mehrere Venturikehlen und eine oder mehrere Hybriddüsen vorgeschaltet ist.

Der Differenzdruckwäscher mit einstellbaren Venturikehlen wird nachfolgend auch Reither-Venturiwäscher und der Differenzdruckwäscher umfassend ein oder mehrere Venturikehlen und eine oder mehrere Hybriddüsen wird nachfolgend auch Bayer-Reither-Venturiwäscher genannt.

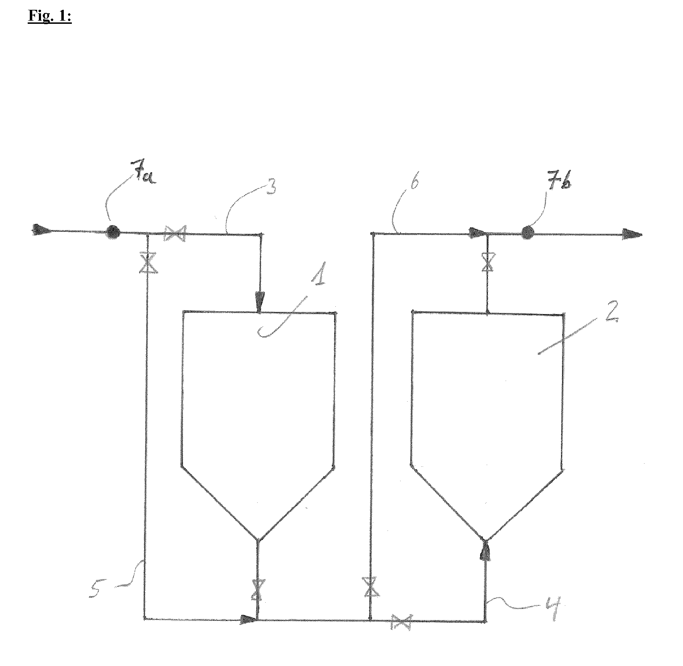

Bei vielen industriellen Verfahren, beispielsweise bei Verbrennungs-, Sinter-, Röst- und Trocknungsprozessen in der Chemie-, Steine-/Erden- und Metallindustrie, fällt Abluft enthaltend Staub, insbesondere Feinstaub, an. Als Feinstaub im Sinne der vorliegenden Erfindung werden Partikel bezeichnet, deren $d_{50}$-Wert zwischen 0,1 $\mu$m und 1,0 $\mu$m liegt, wobei der Wert $d_{50}$ der aerodynamische Durchmesser ist, d.h. der Durchmesser, bei dem ein Kaskadenimpaktor eine Abscheideeffizienz von 50 % besitzt. Ein solcher Kaskadenimpaktor ist beispielsweise der Eight-Stage Non-Viable Andersen Cascade Impactor von Thermo Scientific™ oder der in der internationalen Patentanmeldung WO2007062818A1 von Seite 4, Zeile 14, bis Seite 14 und den Figuren 1 bis 5 beschriebene Kaskadenimpaktor. Da Feinstaub für den Menschen gesundheitsgefährdend ist, muss der Feinstaub möglichst vollständig aus der Abluft entfernt werden, bevor diese in die Umwelt abgegeben werden darf. Der zu unterschreitende oder zumindest einzuhaltende Grenzwert für die Feinstaubkonzentration in der Abluft beträgt dabei 10 mg/Nm$^3$, wobei Nm$^3$ für Normkubikmeter steht. Ein Normkubikmeter ist diejenige Gasmenge, die bei einem Druck von 1,01325 bar, einer Luftfeuchtigkeit von 0 % (trockenes Gas) und einer Temperatur von 273,15 K ein Volumen von einem Kubikmeter hätte.

Schon früh wurden zur Entfernung von Staub, insbesondere von Feinstaub, aus der Abluft Differenzdruckwäscher, auch Venturiwäscher genannt, eingesetzt. Dieses sind Nasswäscher umfassend ein Strömungsrohr mit einer Verengung, der Venturikehle, und eine über oder in der Kehle angeordnete Zuführvorrichtung für Waschflüssigkeit in Form einer Druckdüse. Staub kann so bis zu Partikelgrößen von 0,1 $\mu$m gebunden werden. Die Staubabscheidung erfolgt in drei Phasen: 1. Die Teilchen treffen auf die Flüssigkeitsoberfläche, 2. sie bleiben an der Flüssigkeitsoberfläche haften, 3. die Tropfen der Flüssigkeit werden abgeschieden.

Kritisch für die Abscheidung von Feinstaub ist insbesondere die Phase 1. Die Abscheidung der Staubkörner in Phase 1 auf den Flüssigkeitstropfen erfolgt hauptsächlich durch Trägheitsabscheidung an schnell fliegenden Tropfen. Die Trägheitsabscheidung wird umso besser, je größer die Relativgeschwindigkeit zwischen Tropfen und Staubkorn und je kleiner der Tropfendurchmesser ist.

Die Abscheideleistung hängt bei den Venturiwäschern mit konventioneller Bedüsung, wie sie beispielsweise auch im Reiher-Venturiwäscher eingesetzt wird, davon ab, in welchem Maß die Tropfen der Waschflüssigkeit in der Venturikehle zerstäubt und mit der Abluft verwirbelt werden, so dass möglichst viele Staubpartikel auf die Flüssigkeitsoberflächen treffen und abgeschieden werden. Die Scherkräfte und der Grad der Verwirbelung des Abluft- Flüssigkeitsgemischs in der Venturikehle nehmen mit der Größe der Venturikehle ab. Die Größe der Venturikehle und die Geschwindigkeit des Abluftstroms bestimmen den Venturidruckverlust des Abluftstroms, wobei unter Druckverlust ein im Wäscher resultierender Differenzdruck zwischen dem Druck am Eingang des Wäschers und dem Druck am Ausgang des Wäschers verstanden wird. Der Druckverlust steigt mit Verkleinerung der Venturikehle und Vergrößerung des Abluftstroms. Die Abscheideleistung steigt mit zunehmendem Venturidruckverlust. Nachteilig an allen bekannten Venturiwäschern ist, dass nur ein hoher Venturidruckverlust zu einer guten Abscheideleistung führt. Typische Venturiwäscher werden ab 20 mbar bis 200 mbar Druckverlust betrieben. Ein hoher Druckverlust bedeutet jedoch einen hohen Energiebedarf, um die benötigte Förderleistung für den Abluftstrom zu erreichen. Es ist außerdem nachteilig, dass sich bei einer Änderung des Abluftdurchsatzes bei fester Größe der Venturikehle wegen der veränderten Geschwindigkeit der Abluft der Venturidruckverlust ändert.

Den letztgenannten Nachteil adressiert der eingangs angeführte Reither-Wäscher, der auch in der DE4331301A1 offenbart ist. Zusammengefasst ist ein Reither-Wäscher ein:

Differenzdruckwäscher bestehend aus einem Venturikanal, der in Strömungsrichtung bis zu einem minimalen Querschnitt konvergierende und dann divergierende Seitenwände aufweist, wobei die dadurch gebildete Kehle im Bereich des minimalen Querschnitts die Gestalt eines Spalts in etwa rechteckiger Form aufweist, einem im Strömungsrichtung hinter dem Spalt angeordneten Verdrängungskörper, der sich über die gesamte Spaltlänge erstreckt und auf den Spalt zu und von diesem weg verschiebbar gelagert ist, zwei zwischen den Wänden der Kehle und der Verdrängerkörperaußenwand in etwa parallel verlaufende Venturikehlen, deren Querschnitte durch Verschieben des Verdrängerkörpers wahlweise einstellbar sind, sowie zumindest einer über der Kehle angeordneten Waschflüssigkeitszuführvorrichtung, wobei der Kanal durch ein Strömungsrohr gebildet ist und in dem Strömungsrohr zwei die Kehle bildende Querrohre angeordnet sind.

Durch die verstellbaren Venturikehlen kann auch bei veränderter Geschwindigkeit der Abluft der Druckverlust konstant gehalten werden. Jedoch ist auch beim Reither-Wäscher der Druckverlust, der nötig ist, um die Feinstaubkonzentration in der Abluft auf einen Wert von 10 mg/Nm$^3$ oder kleiner zu reduzieren, noch verhältnismäßig hoch. Der hohe Druckverlust bedingt nachteilig:

- eine hohe mechanische Beanspruchung und Abnutzung durch hohe Strömungsgeschwindigkeiten im engsten Querschnitt;

- einen hohen apparativen Aufwand zur Festigkeitsdimensionierung von Behälter, Gebläse und Rohrleitungen;

- aufwändige Abdichtung zur Vermeidung von Falschluft.

Diese Nachteile wiederum adressiert der eingangs angeführte Bayer-Reither-Venturiwäscher, der auch in der DE19832174C1 offenbart ist. Dieser Bayer-Reither-Venturiwäscher umfasst eine Vorrichtung zur Reinigung eines Abluftstroms bei dem der Abluftstrom ohne oder mit einem geringen Druckverlust von maximal 30 mbar, bevorzugt bis maximal 20 mbar, durch eine oder mehrere parallele Venturikehlen strömt, der oder die durch eine oder mehrere an sich aus DE4315385A1 bekannten Hybriddüsen mit einer Waschflüssigkeit besprüht werden. Eine Hybriddüse wird konstant mit einer Waschflüssigkeit und Druckluft beaufschlagt. Die Flüssigkeits- und Gaszuführung sind mit einer ersten Resonanzkammer verbunden, der über eine Blende mindestens eine weitere Resonanzkammer nachgeschaltet ist. Die in Strömungsrichtung gesehen letzte Resonanzkammer ist mit der Austrittsöffnung der Hybriddüse verbunden. Die Hybriddüse kann sowohl den Betriebsmodus einer Druckdüse als auch den Betriebsmodus einer Zweistoffdüse annehmen. Das kennzeichnende an der Hybriddüse ist, dass sie bei konstanter Beaufschlagung mit einer bestimmten Menge an Waschflüssigkeit und einer bestimmten Luftmenge, diese Flüssigkeitsmengen und Luftmengen nicht gleichmässig verdüst, sondern pulsierend den Betriebsmodus ständig wechselt.

Eine Zweistoffdüse unterscheidet sich von einer Druckdüse dadurch, dass sie zusätzlich mit Luft beaufschlagt wird. Es werden fortwährend Tropfen mit einem im Vergleich zur Druckdüse kleineren mittleren Tropfendurchmesser erzeugt. Der mittlere Tropfendurchmesser wird durch das Mengenstromverhältnis von Zerstäuberluft zu Flüssigkeit in der Düse bestimmt und sinkt mit zunehmender Zerstäuberluftmenge. Die Reichweite eines Tropfens wird durch den Impuls der Zerstäuberluft und den Übertrag dieses Impulses auf einen ganzen Tropfenschwarm bestimmt. Zusammengefasst ist ein Bayer-Reither-Wäscher ein:

Differenzdruckwäscher zur Reinigung von Abluft, bestehend aus einem Strömungsrohr, wobei sich eine oder mehrere parallele Venturikehlen in dem Strömungsrohr befinden und eine oder mehrere Hybriddüsen stromaufwärts der Venturikehlen angeordnet sind. Diese Hybriddüse besteht vorzugsweise aus einem ersten Resonanzraum, in den ein Flüssigkeitsverteilerrohr und die Zuführung für ein Zerstäubungshilfsmittel münden, und einem zweiten Resonanzraum , der durch eine Blende vom ersten Resonanzraum getrennt ist, und einem Sprühkopf, der durch eine weitere Blende vom zweiten Resonanzraum getrennt ist.

Mit dem Bayer-Reither-Venturiwäscher ist es möglich ein Verfahren durchzuführen bei dem ein Rohgasstrom ohne oder mit einem geringen Druckverlust durch eine oder mehrere parallele Venturikehlen strömt, die durch eine oder mehrere Hybriddüsen mit einer Waschflüssigkeit besprüht werden.

Dabei ist die Menge der benötigten Waschflüssigkeit gegenüber anderen Differenzdruckwäschern deutlich herabgesetzt und die Abscheideleistung deutlich höher als mit konventioneller Bedüsung.

Nachteilig am Bayer-Reither-Wäscher wiederum ist der hohe Energiebedarf für die Erzeugung von Druckluft zur Zerstäubung der Waschflüssigkeit.

Dieser Nachteil kommt insbesondere dann zum Tragen, wenn die Abluft Fraktionen von feineren und gröberen Partikeln enthält, insbesondere Partikel enthält, deren $d_{50}$-Werte einen Bereich überstreichen, bei dem der minimale und maximale Wert sich mindestens um den Faktor 5 unterscheiden, wobei innerhalb dieses Bereichs mindestens - bezogen auf die Anzahl der Partikel - 80 % der Partikel liegen.

Zwar wird allgemein für die Abscheidung der feineren Partikel, also Partikeln mit einem $d_{50}$- Wert unterhalb von 0,5 $\mu$m, viel mehr Energie benötigt als bei der Abscheidung von gröberen Partikeln, also Partikeln mit einem $d_{50}$-Wert gleich oder größer als 0,5 $\mu$m, wobei der Energie beim Reither-Venturiwäscher in Form von Antriebsenergie für ein Gebläse zur Überwindung des abluftseitigen Druckverlust und beim Bayer-Reither-Venturiwäscher im Wesentlichen in Form von Druckluft bereitgestellt wird, jedoch ist der Energieverbrauch zur Abscheidung der gröberen Partikel beim Bayer-Reither-Venturiwäscher gegenüber dem beim Reither-Venturiwäscher größer.

Aufgabe der vorliegenden Erfindung ist es daher, eine Vorrichtung zur Verfügung zu stellen, die es ermöglicht, einerseits mit hohem Abscheidegrad und andererseits mit geringem Energiebedarf eine Abluft enthaltend Fraktionen von feineren und gröberen Staubpartikeln, insbesondere feineren und gröberen Feinstaubpartikeln, zu reinigen. Insbesondere soll es die Vorrichtung ermöglichen, die Feinstaubkonzentration in der Abluft von 10 mg/Nm³ oder darunter einzustellen. Die Vorrichtung soll es außerdem ermöglichen, flexibel auf der Zusammensetzung des Rohgases bezüglich der Konzentration an gröberen und feineren Staubpartikeln, insbesondere feineren und gröberen Feinstaubpartikeln, angepasst zu werden, ohne dass der Abscheidegrad sich verringert. Vorzugsweise sollen dabei gegenüber dem Stand der Technik zusätzlich sowohl Energie, Waschflüssigkeit und andere Betriebsstoffe gespart und Verschleiß verringert werden. Des Weiteren soll die Vorrichtung gegenüber anderen Vorrichtungen mit vergleichbarem Abscheidegrad kostengünstiger sein.

Nachfolgend wird die Abluft mit einer Feinstaubkonzentration von 10 mg/Nm³ oder darunter auch als Reingas bezeichnet, eine Abluft mit einer Feinstaubkonzentration von über 10 mg/Nm³ auch als Rohgas.

Gelöst wird die Aufgabe überraschenderweise durch eine Vorrichtung zur Reinigung von Rohgas von Feinstaub, bei der ein Reither-Venturiwäscher und ein Bayer-Reither-Venturiwäscher so miteinander verbunden sind, dass der Rohgasstrom zuerst in den Reither-Venturiwäscher und danach in den Bayer-Reither-Venturiwäscher geleitet werden bzw. strömen kann. Insbesondere wird die Aufgabe gelöst durch eine Vorrichtung zur Reinigung von Rohgas von Feinstaub, bei der ein Reither-Venturiwäscher und ein Bayer-Reither-Venturiwäscher so miteinander verbunden sind, dass der Rohgasstrom zuerst in den Reither-Venturiwäscher und danach in den Bayer-Reither-Venturiwäscher geleitet wird bzw. strömt.

So wurde gefunden, dass es die erfindungsgemäße Vorrichtung ermöglicht, mit einem vergleichsweise niedrigen Differenzdruck im Reither-Venturiwäscher und gleichzeitig einem geringen Energiebedarf für Druckluft im Bayer-Reither-Venturiwäscher einen hohen Abscheidegrad sowohl von Partikeln, die der Fraktion der feineren Partikel, als auch von Partikeln, die der Fraktion der gröberen Partikel angehören, zu erreichen.

Der Abscheidegrad ist die Differenz von 1 vermindert um den Quotienten der Feinstaubkonzentration im Reingas geteilt durch den im Rohgas, vorzugsweise dargestellt in Teilen von Hundert, also Prozent. Wenn also beispielsweise ein Wäscher die Feinstaubkonzentration einer Abluft von 200 mg/Nm³ auf 10 mg/Nm³ abreinigen soll, so benötigt er einen Abscheidegrad von 0,95 entsprechend 95 %:

$$1 - ( 10 \text{ mg/Nm}^3 \,/\, 200 \text{ mg/Nm}^3 ) = 0{,}95.$$

Gelingt es beispielsweise, die Fraktion von gröberen Partikeln im Rohgas mit einem vorgeschaltetem Reither-Venturiwäscher abzuscheiden, wodurch beispielsweise die Feinstaubkonzentration von 200 mg/Nm³ auf 44 mg/Nm³ verringert wird, so wird nur noch ein Abscheidegrad von 77,3 % gebraucht, um eine Feinstaubkonzentration von 10 mg/Nm³ in der Abluft zu erreichen.

Dadurch wird im Bayer-Reither-Venturiwäscher viel Energie in Form von Druckluft eingespart. Überraschenderweise ist die im vorgeschalteten Reither-Venturiwäscher für die Abscheidung der Fraktion von gröberen Partikeln aufzubringende Energie in Form von Druckverlust deutlich geringer, als die beim Bayer-Reither-Wäscher eingesparte Energie, so dass in der Summe eine Energieersparnis verbleibt.

Die Vorteile der erfindungsgemäßen Vorrichtung gegenüber der Reinigung eines Rohgases nur durch eine Art von Venturiwäscher sind:

- geringerer Bedarf an Energie und anderen Betriebsstoffen.

- geringerer Verschleiß der Einzelkomponenten des Reither-Venturiwäschers und des Bayer-Reither-Venturiwäschers.

- geringerer konstruktiver und statischer Aufwand bei der Auslegung des Reither-Venturiwäschers und des Bayer-Reither-Venturiwäschers, da die Vorrichtung - bezogen auf den Umgebungsdruck - mit geringeren Druckverlust sowohl beim Reither-Venturiwäscher als auch beim Bayer-Reither-Venturiwäscher und zusätzlich geringerer Menge der Druckluft beim Bayer-Reither-Venturiwäscher den geforderten Abscheidegrad erreicht.

- bei geringerer oder fehlender Belastung des Rohgases mit (1) gröberen Partikeln oder (2) feineren Partikeln kann durch Abschalten und/oder Umgehen im Falle (1) des Reither-Venturiwäscher oder im Falle (2) des Bayer-Reither-Venturiwäscher zusätzlich sowohl Energie, Waschflüssigkeit und andere Betriebsstoffe gespart und Verschleiß verringert werden, ohne dass der Abscheidungsgrad verändert wird. Dazu kann die Vorrichtung für den Fall (1) mit einer oder mehreren Leitungen versehen sein, die es ermöglichen, den Rohgasstrom in den Bayer-Reither-Venturiwäscher zu leiten, ohne dass der Rohgasstrom durch den Reither-Venturiwäscher geleitet wird und für den Fall (2) mit einer oder mehreren Leitungen versehen sein, die es ermöglichen, den Reingasstrom, der den Reither-Venturiwäscher verlässt, weiterzuleiten, ohne dass er durch den Bayer-Reither-Wäscher geleitet wird.

- bei höherer Belastung des Rohgases mit (1) gröberen Partikeln oder (2) feineren Partikeln kann durch im Falle (1) höheren Druckverlust im Reither-Venturiwäscher oder im Falle (2) Erhöhung der Druckluftmenge im Bayer-Reither-Venturiwäscher der Abscheidegrad konstant gehalten werden, ohne dass sowohl die Fahrweise des Reither-Venturiwäscher als auch des Bayer-Reither-Venturiwäscher verändert werden müssen, wodurch ebenfalls sowohl Energie, Waschflüssigkeit und andere Betriebsstoffe gespart und Verschleiß verringert werden.

- höhere Flexibilität gegenüber unterschiedlichen Belastungen des Rohgases mit verschiedenen Partikelfraktionen.

Dabei ist mit geringerer bzw. höherer Belastung des Rohgases mit gröberen Partikeln oder feineren Partikeln gemeint, dass die Belastung mit der jeweiligen Partikelart geringer bzw. höher ist, als die Belastung, für die die erfindungsgemäße Vorrichtung bei bestimmungsgemäßen Gebrauch im bestimmungsgemäßen Betriebsbereich ausgelegt ist. Um die oben genannten Vorteile optimal realisieren zu können, weist die Vorrichtung mindestens eine, bevorzugt mindestens zwei, besonders bevorzugt genau zwei Messstellen zur Messung der Feinstaubkonzentration und der Feinstaubzusammensetzung bezüglich des mittleren Partikeldurchmessers $d_{50}$ auf.

Da sowohl der Reither-Venturiwäscher als auch der Bayer-Reither-Wäscher eine gegenüber anderen Venturiwäschern geringere Bauhöhe aufweisen, braucht die erfindungsgemäße Vorrichtung nur wenig Platz. Dies gilt insbesondere, wenn der Reither-Venturiwäscher und der Bayer-Reither-Wäscher U-förmig zueinander angeordnet sind. U-förmig zueinander angeordnet im Sinne der vorliegenden Erfindung bedeutet, dass die Abluft, die aus dem Reither-Venturiwäscher unten an dessen Ausgang herausströmt, unten in den neben dem Reither-Venturiwäscher stehenden Bayer-Reither-Venturiwäscher in dessen Eingang hineingeleitet wird, und diesen wieder oben aus dessen Ausgang herausströmt.

Die erfindungsgemäße Vorrichtung wird vorteilhaft eingesetzt zur Entfernung von Feinstaub aus einem Rohgas enthaltend einen Feinstaubkonzentration von 10 mg/Nm$^3$ und mehr, bevorzugt 10 mg/Nm$^3$ bis 1000 mg/Nm$^3$, besonders bevorzugt 20 mg/Nm$^3$ bis 500 mg/Nm$^3$, ganz bevorzugt 50 mg/Nm$^3$ bis 200 mg/Nm$^3$, wobei das Massenverhältnis von gröberen zu feineren Partikeln im Bereich von 10:1 bis 1:100, bevorzugt 1:1 bis 1:10 liegt.

In einer alternativen Ausführungsform der erfindungsgemäßen Vorrichtung wird anstatt des Reither-Venturiwäschers ein Venturiwäscher, der kein Reither-Venturiwäschers ist, insbesondere weder ein Reither-Venturiwäschers noch ein Bayer-Reither-Venturiwäscher ist, dem Bayer-Reither-Venturiwäscher vorgeschaltet.

Aufgabe der vorliegenden Erfindung ist es außerdem, ein kontinuierliches Verfahren zur Reinigung von Rohgas zur Verfügung zu stellen, das es ermöglicht, einerseits mit hohem Abscheidegrad und andererseits mit geringem Energiebedarf ein Rohgas enthaltend Fraktionen von feineren und gröberen Staubpartikeln, insbesondere feineren und gröberen Feinstaubpartikeln, zu reinigen. Insbesondere soll es das Verfahren ermöglichen, die Feinstaubkonzentration in der Abluft von 10 mg/Nm$^3$ oder darunter einzustellen. Das Verfahren soll es außerdem ermöglichen, flexibel auf der Zusammensetzung des Rohgases bezüglich der Konzentration an gröberen und feineren Staubpartikeln, insbesondere feineren und gröberen Feinstaubpartikeln, angepasst zu werden, ohne dass der Abscheidegrad sich verringert. Vorzugsweise sollen dabei gegenüber dem Stand der Technik zusätzlich sowohl Energie, Waschflüssigkeit und andere Betriebsstoffe gespart und Verschleiß verringert werden.

Gelöst wird die Aufgabe überraschenderweise durch ein kontinuierliches Verfahren zur Reinigung von Rohgas von Feinstaub, bei dem das Rohgas zuerst durch einen Reither-Venturiwäscher und nachfolgend durch einen Bayer-Reither-Venturiwäscher geleitet wird.

Das Verfahren zeichnet sich erfindungsgemäß bevorzugt dadurch aus, dass

- bei geringerer oder fehlender Belastung des Rohgases mit gröberen Partikeln der Reither-Venturiwäscher abgeschaltet und/oder der Rohgasstrom an diesem vorbei in den Bayer-Reither-Venturiwäscher geleitet werden kann. Der Abscheidegrad kann dabei konstant gehalten werden.

- bei geringerer oder fehlender Belastung des Rohgases mit feineren Partikeln der Bayer-Reither-Venturiwäscher abgeschaltet und/oder der aus dem Reither-Venturiwäscher austretende Reingasstrom an diesem vorbeigeleitet werden kann. Der Abscheidegrad kann dabei konstant gehalten werden.

- bei höherer Belastung des Rohgases mit gröberen Partikeln der Reither-Venturiwäscher mit höherem Druckverlust als bei geringerer Belastung des Rohgases mit gröberen Partikeln betrieben werden kann, ohne dass die Fahrweise des Bayer-Reither-Venturiwäscher verändert werden muss. Der Abscheidegrad kann dabei konstant gehalten werden.

- bei höherer Belastung des Rohgases mit feineren Partikeln der Druckluftmenge im Bayer-Reither-Venturiwäscher mit höherer Druckluftmenge Belastung des Rohgases mit feineren Partikeln betrieben werden kann, ohne dass die Fahrweise des Reither-Venturiwäscher verändert werden muss. Der Abscheidegrad kann dabei konstant gehalten werden.

Die Feinstaubkonzentrationen im Reingas und - soweit beispielsweise zur Steuerung der oben genannten Fahrweisen nötig - im Rohgas können kontinuierlich gemessen werden, beispielsweise durch Streulichtphotometer, und die oben genannten Fahrweisen können rechnergesteuert mittels der Messwerte schnell eingestellt werden. Jedoch ist auch möglich, die Feinstaubkonzentrationen diskontinuierliche zu messen, wobei die diskontinuierlichen Messungen auch manuell erfolgen können.

Das Verfahren kann also sehr flexibel der Zusammensetzung des Rohgases bezüglich der Konzentration an gröberen und feineren Feinstaubpartikeln angepasst werden. Dadurch werden zusätzlich sowohl Energie, Waschflüssigkeit und andere Betriebsstoffe gespart und Verschleiß verringert, ohne dass der Abscheidungsgrad verändert wird.

Das erfindungsgemäße Verfahren wird vorteilhaft eingesetzt zur Entfernung von Feinstaub aus einem Rohgas enthaltend eine Feinstaubkonzentration von 10 mg/Nm$^3$ und mehr, bevorzugt 10 mg/Nm$^3$ bis 1000 mg/Nm$^3$, besonders bevorzugt 20 mg/Nm$^3$ bis 500 mg/Nm$^3$, ganz bevorzugt 50 mg/Nm$^3$ bis 200 mg/Nm$^3$, wobei das Massenverhältnis von gröberen zu feineren Partikeln im Bereich von 10:1 bis 1:100, bevorzugt 1:1 bis 1:10 liegt.

In einer alternativen Ausführungsform des erfindungsgemäßen Verfahrens wird anstatt des Reither-Venturiwäschers ein Venturiwäscher, der kein Reither-Venturiwäschers ist, insbesondere weder ein Reither-Venturiwäschers noch ein Bayer-Reither-Venturiwäscher ist, dem Bayer-Reither-Venturiwäscher vorgeschaltet.

Die Erfindung wird durch die nachfolgenden Abbildungen und Beispiele erläutert, ohne dass die Erfindung auf die in den Beispielen dargestellten Ausführungsformen beschränkt wird.

**Abbildung 1 zeigt:**

Eine schematische Darstellung der erfindungsgemäßen Vorrichtung umfassend einen Bayer-Reither-Venturiwäscher mit vorgeschaltetem Reither-Venturiwäscher. Dabei gilt folgende Bezugszeichenliste

1    Reither-Venturiwäscher

2    Bayer-Reither-Venturiwäscher

3    Zuleitung von Abluft zum Reither-Venturiwäscher

4    Zuleitung von Abluft vom Reither-Venturiwäscher zum Bayer-Reither-Venturiwäscher

5    Zuleitung von Abluft zum Bayer-Reither-Venturiwäscher unter Umgehung des Reither-Venturiwäschers

6    Ableitung von Abluft unter Umgehung des Bayer-Reither-Venturiwäschers

7    a, b, Messpunkte zur Bestimmung der Feinstaubkonzentration

**Beispiel 1:**

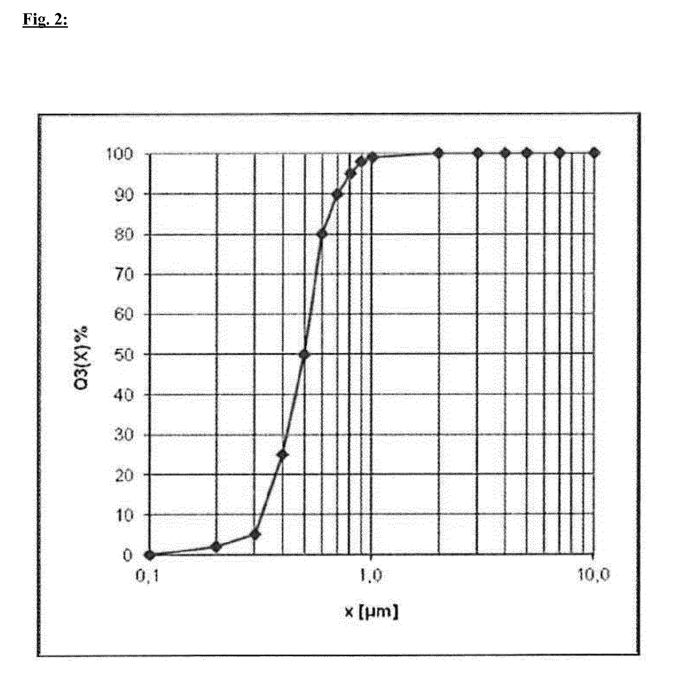

Feinstaub mit einem mittleren Partikeldurchmesser $d_{50}$- von 0,5 $\mu$m mit einer Massedichte von 2 g/cm$^3$, einer Feinstaubkonzentration im Rohgas von 200 mg/Nm$^3$ und einer Partikelgrößenverteilung gemäß Abb. 2 soll aus der Abluft abgeschieden werden. Die Massedichte kann beispielsweise nach DIN 66137-2:2004-12, Seiten 4 bis 7, zuverlässig bestimmt werden.

Dabei ist in Abb. 2 auf der Ordinate die Verteilungssumme der Mengenart Masse (hier bezeichnet als Q3(x)) in % und auf der Abzisse die Partikeldurchmesser $d_{50}$ als x in $\mu$m aufgetragen.

Die geforderte Feinstaubkonzentration im Reingas beträgt 10 mg/Nm$^3$. Der Abluftvolumenstrom beträgt 25.000 m$^3$/h bei 50 °C, wasserdampfgesättigt, entsprechend 18.555 Nm$^3$/h, trocken.

Eingesetzt werden ein Reither-Venturiwäscher mit einem Differenzdruck von 21 mbar und ein Bayer-Reither-Venturiwäscher mit einem Differenzdruck von 5 mbar sowie einem Energieeintrag durch die Druckluft zur Zerstäubung der Waschflüssigkeit von 48kWh.

Es wurden folgende Ergebnisse gewonnen:

**Tabelle 1:**

| | | Reither-Venturiwäscher | Bayer-Reither-Venturiwäscher | erfindungsgemäße Vorrichtung |
|---|---|---|---|---|
| Differenzdruck*) | mbar | 140 | 5 | 21 |
| Energiebedarf gesamt | kWh | 125,50 | 207,71 | 72,49 |
| Gebläseantriebsenergie zur Überwindung des Druckverlustes für Gasförderung | kWh | 121,62 | 4,43 | 18,32 |
| Energiebedarf zur Erzeugung der Druckluft | kWh | - | 200,83 | 48,00 |
| Energiebedarf für Verdüsung der Waschflüssigkeit | kWh | 3,89 | 2,45 | 6,17 |
| Energiebedarf gesamt, bezogen auf 1000 Nm$^3$ | kWh/1000 Nm$^3$ | 6,76 | 11,19 | 3,90 |
| *) Bei der Berechnung der Vergleichswerte wurde der Druckverlust des Tropfenabscheiders nicht berücksichtigt. Dieser Druckverlust ist bei allen drei Varianten gleich groß. | | | | |

Den Ergebnissen für den Gesamtenergiebedarf kann klar entnommen werden, dass die erfindungsgemäße Vorrichtung sowohl gegenüber dem Reither-Venturiwäscher als auch gegenüber dem Bayer-Reither-Venturiwäscher einen geringeren Energiebedarf zur Erreichung des gewünschten Abscheidegrads aufweist.

**Beispiel 2:**

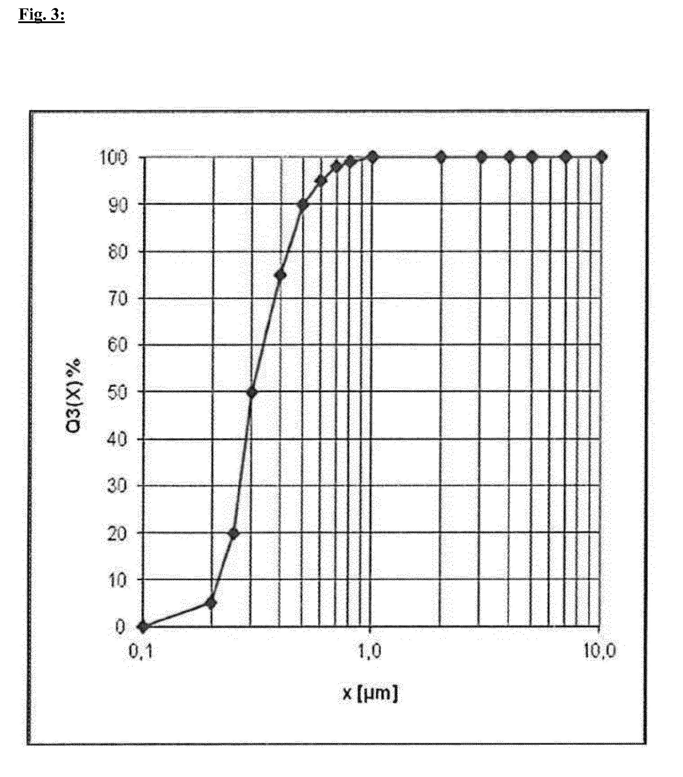

Feinstaub mit einem mittleren Partikeldurchmesser $d_{50}$ von 0,3 $\mu$m mit einer Massedichte von 2 g/cm$^3$, einem Feinstaubkonzentration im Rohgas von 200 mg/Nm$^3$ und einer Partikelgrößenverteilung gemäß Abb. 3 soll aus der Abluft abgeschieden werden. Die Massedichte kann beispielsweise nach DIN 66137-2:2004-12, Seiten 4 bis 7, zuverlässig bestimmt werden.

Dabei ist in Abb. 3 auf der Ordinate die Verteilungssumme der Mengenart Masse (hier bezeichnet als Q3(x)) in % und auf der Abzisse die Partikeldurchmesser $d_{50}$ als x in $\mu$m aufgetragen.

Die geforderte Feinstaubkonzentration im Reingas beträgt 10 mg/Nm$^3$. Der Abluftvolumenstrom beträgt 25.000 m$^3$/h bei 50 °C, wasserdampfgesättigt, entsprechend 18.555 Nm$^3$/h, trocken.

Eingesetzt wird ein Reither-Venturiwäscher mit einem Differenzdruck von 35 mbar und ein Bayer-Reither-Venturiwäscher mit einem Differenzdruck von 5 mbar sowie einem Energieeintrag durch die Druckluft zur Zerstäubung der Waschflüssigkeit von 95 kWh.

Es wurden folgende Ergebnisse gewonnen:

**Tabelle 2:**

| | | Reither-Venturiwäscher | Bayer-Reither-Venturiwäscher | erfindungsgemäße Vorrichtung |
|---|---|---|---|---|
| Differenzdruck | mbar | 175 | 5 | 35 |
| Energiebedarf gesamt | kWh | 155,89 | 480,37 | 132,40 |
| Gebläseantriebsenergie zur Überwindung des Druckverlusts für Gasförderung | kWh | 152,00 | 4,43 | 30,47 |
| Energiebedarf zur Erzeugung der Druckluft | kWh | - | 473,00 | 95,00 |
| Energiebedarf für Verdüsung der Waschflüssigkeit | kWh | 3,89 | 2,94 | 6,93 |

(fortgesetzt)

| | | Reither-Venturiwäscher | Bayer-Reither-Venturiwäscher | erfindungsgemäße Vorrichtung |
|---|---|---|---|---|
| Energiebedarf gesamt, bezogen auf 1000 Nm³ | kWh/1000 Nm³ | 8,40 | 25,89 | 7,13 |

*) Bei der Berechnung der Vergleichswerte wurde der Druckverlust des Tropfenabscheiders nicht berücksichtigt. Dieser Druckverlust ist bei allen drei Varianten gleich groß.

Auch für diesen Fall kann den Ergebnissen für den Gesamtenergiebedarf klar entnommen werden, dass die erfindungsgemäße Vorrichtung sowohl gegenüber dem Reither-Venturiwäscher als auch gegenüber dem Bayer-Reither-Venturiwäscher einen geringeren Energiebedarf zur Erreichung des gewünschten Abscheidegrads aufweist.

**Patentansprüche**

1. Vorrichtung zur Reinigung von Rohgas von Feinstaub, bei der ein Reither-Venturiwäscher und ein Bayer-Reither-Venturiwäscher so miteinander verbunden sind, dass der Rohgasstrom zuerst in den Reither-Venturiwäscher und danach in den Bayer-Reither-Venturiwäscher geleitet werden kann.

2. Vorrichtung nach Anspruch 1, **dadurch gekennzeichnet, dass** ein Reither-Venturiwäscher und ein Bayer-Reither-Venturiwäscher so miteinander verbunden sind, dass der Rohgasstrom zuerst in den Reither-Venturiwäscher und danach in den Bayer-Reither-Venturiwäscher geleitet wird.

3. Vorrichtung nach Anspruch 1 oder 2, **dadurch gekennzeichnet, dass** Reither-Venturiwäscher und der Bayer-Reither-Wäscher U-förmig zueinander angeordnet sind.

4. Vorrichtung nach einem der vorhergehenden Ansprüche, **dadurch gekennzeichnet, dass** das die Vorrichtung mindestens eine, bevorzugt mindestens zwei, besonders bevorzugt genau zwei Messstellen zur Messung der Feinstaubkonzentration und der Feinstaubzusammensetzung bezüglich des mittleren Partikeldurchmessers $d_{50}$ aufweist.

5. Kontinuierliches Verfahren zur Reinigung von Rohgas von Feinstaub, bei dem das Rohgas zuerst durch einen Reither-Venturiwäscher und nachfolgend durch einen Bayer-Reither-Venturiwäscher geleitet wird.

6. Verfahren nach Anspruch 5, **dadurch gekennzeichnet, dass** bei geringerer oder fehlender Belastung des Rohgases mit gröberen Partikeln der Reither-Venturiwäscher abgeschaltet und/oder der Rohgasstrom an diesem vorbei in den Bayer-Reither-Venturiwäscher geleitet wird.

7. Verfahren nach Anspruch 5, **dadurch gekennzeichnet, dass** bei geringerer oder fehlender Belastung des Rohgases mit feineren Partikeln der Bayer-Reither-Venturiwäscher abgeschaltet und/oder der aus dem Reither-Venturiwäscher austretende Reingasstrom an diesem vorbeigeleitet wird.

8. Verfahren nach Anspruch 5, **dadurch gekennzeichnet, dass** bei höherer Belastung des Rohgases mit gröberen Partikeln der Reither-Venturiwäscher mit höherem Druckverlust als bei geringerer Belastung des Rohgases mit gröberen Partikeln betrieben wird, ohne dass die Fahrweise des Bayer-Reither-Venturiwäscher verändert wird.

9. Verfahren nach Anspruch 5, **dadurch gekennzeichnet, dass** bei höherer Belastung des Rohgases mit feineren Partikeln der Druckluftmenge im Bayer-Reither-Venturiwäscher mit höherer Druckluftmenge Belastung des Rohgases mit feineren Partikeln betrieben wird, ohne dass die Fahrweise des Reither-Venturiwäscher verändert wird.

10. Verwendung einer Vorrichtung nach einem der Ansprüche 1 bis 4 zur Entfernung von Feinstaub aus einem Rohgas enthaltend eine Feinstaubkonzentration von 10 mg/Nm³ und mehr, bevorzugt 10 mg/Nm³ bis 1000 mg/Nm³, besonders bevorzugt 20 mg/Nm³ bis 500 mg/Nm³, ganz bevorzugt 50 mg/Nm³ bis 200 mg/Nm³, wobei das Massenverhältnis von gröberen zu feineren Partikeln im Bereich von 10:1 bis 1:100, bevorzugt 1:1 bis 1:10 liegt.

11. Verwendung eines Verfahrens nach einem der Ansprüche 5 bis 9 zur Entfernung von Feinstaub aus einem Rohgas enthaltend eine Feinstaubkonzentration von 10 mg/Nm$^3$ und mehr, bevorzugt 10 mg/Nm$^3$ bis 1000 mg/Nm$^3$, besonders bevorzugt 20 mg/Nm$^3$ bis 500 mg/Nm$^3$, ganz bevorzugt 50 mg/Nm$^3$ bis 200 mg/Nm$^3$, wobei das Massenverhältnis von gröberen zu feineren Partikeln im Bereich von 10:1 bis 1:100, bevorzugt 1:1 bis 1:10 liegt.

12. Vorrichtung, Verfahren oder Verwendung nach einem der vorgehenden Ansprüche, **dadurch gekennzeichnet, dass** anstatt des Reither-Venturiwäschers ein Venturiwäscher, der kein Reither-Venturiwäschers ist, insbesondere weder ein Reither-Venturiwäschers noch ein Bayer-Reither-Venturiwäscher ist, dem Bayer-Reither-Venturiwäscher vorgeschaltet ist.

**Fig. 1:**

**Fig. 2:**

**Fig. 3:**

**Europäisches Patentamt**
**European Patent Office**
**Office européen des brevets**

# EUROPÄISCHER RECHERCHENBERICHT

Nummer der Anmeldung

EP 15 16 0998

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 145 193 A (HEGEMANN KARL R) 20. März 1979 (1979-03-20) * Anspruch 1; Abbildungen 3,4 * ----- | 1,2,5,6, 12 | INV. B01D47/10 B01D47/12 |
| X | US 3 998 626 A (BAUM KURT ET AL) 21. Dezember 1976 (1976-12-21) * Spalte 2, Zeile 8 - Zeile 11; Abbildung 1 * * Spalte 8, Zeile 31 - Zeile 45 * ----- | 1,2,4-12 | |
| A,D | DE 198 32 174 C1 (BAYER AG [DE]) 3. Februar 2000 (2000-02-03) * Ansprüche 4-10 * ----- | 1-12 | |
| A | DE 43 01 886 A1 (EISENGIESEREI UND MASCHINENFAB [DE]) 21. Juli 1994 (1994-07-21) * Spalte 4, Zeile 24 - Zeile 41; Abbildung 1 * ----- | 3,4 | |

RECHERCHIERTE SACHGEBIETE (IPC)

B01D

Der vorliegende Recherchenbericht wurde für alle Patentansprüche erstellt

| Recherchenort | Abschlußdatum der Recherche | Prüfer |
|---|---|---|
| München | 25. September 2015 | García Alonso, Nuria |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
..............................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 15 16 0998

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-09-2015

| Im Recherchenbericht angeführtes Patentdokument | | | Datum der Veröffentlichung | Mitglied(er) der Patentfamilie | | | Datum der Veröffentlichung |
|---|---|---|---|---|---|---|---|
| US | 4145193 | A | 20-03-1979 | KEINE | | | |
| US | 3998626 | A | 21-12-1976 | KEINE | | | |
| DE | 19832174 | C1 | 03-02-2000 | AT | 251490 | T | 15-10-2003 |
| | | | | AU | 743354 | B2 | 24-01-2002 |
| | | | | AU | 5031099 | A | 07-02-2000 |
| | | | | CN | 1309580 | A | 22-08-2001 |
| | | | | DE | 19832174 | C1 | 03-02-2000 |
| | | | | DK | 1098693 | T3 | 09-02-2004 |
| | | | | EP | 1098693 | A1 | 16-05-2001 |
| | | | | ES | 2209469 | T3 | 16-06-2004 |
| | | | | HK | 1039908 | A1 | 18-02-2005 |
| | | | | JP | 4570779 | B2 | 27-10-2010 |
| | | | | JP | 2002520148 | A | 09-07-2002 |
| | | | | PT | 1098693 | E | 27-02-2004 |
| | | | | TW | 469160 | B | 21-12-2001 |
| | | | | US | 6656250 | B1 | 02-12-2003 |
| | | | | WO | 0003788 | A1 | 27-01-2000 |
| DE | 4301886 | A1 | 21-07-1994 | KEINE | | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007062818 A1
- DE 4331301 A1
- DE 19832174 C1
- DE 4315385 A1